# EUROPEAN PATENT SPECIFICATION

(11) **EP 4 471 895 B1**
(45) Date of publication and mention of the grant of the patent: **18.06.2025**
(21) Application number: 23199535.8
(22) Date of filing: 25.09.2023
(51) Int. Cl.: H01M 4/36, H01M 4/525, H01M 4/04, H01M 4/505, H01M 10/052, H01M 10/0525, H01M 10/0562

(54) **CATHODE MATERIAL AND PREPARATION METHOD THEREOF**
KATHODENMATERIAL UND HERSTELLUNGSVERFAHREN DAFÜR
MATÉRIAU DE CATHODE ET SON PROCÉDÉ DE PRÉPARATION

(30) Priority: 02.06.2023 TW 112120622
(43) Date of publication of application: 04.12.2024
(73) Proprietor: Advanced Lithium Electrochemistry Co., Ltd., Taoyuan City 330 (TW)
(72) Inventor: Liu, Hao-Wen, 330 Taoyuan City (TW); Thi, Shiki, 330 Taoyuan City (TW); HSIEH, Han-Wei, 330 Taoyuan City (TW); Wu, Nae-Lih, 330 Taoyuan City (TW)
(74) Representative: 2K Patentanwälte Blasberg Kewitz & Reichel

(56) References cited:
- US-A1- 2022 216 507
- WANG JING ET AL: "High Lithium-Ion Conductivity, Halide-Coated, Ni-Rich NCM Improves Cycling Stability in Sulfide All-Solid-State Batteries", ACS APPLIED ENERGY MATERIALS, vol. 6, no. 7, 25 March 2023 (2023-03-25), pages 3671 - 3681, XP093140123, ISSN: 2574-0962, Retrieved from the Internet <URL:https://pubs.acs.org/doi/pdf/10.1021/acsaem.2c02774> DOI: 10.1021/acsaem.2c02774

## Description

### FIELD OF THE INVENTION

The present disclosure relates to a cathode material and a preparation method thereof, and more particularly to a cathode material and a preparation method thereof for obtaining a solid electrolyte coating layer through an organic solvent thereby enhancing the electrochemical performance.

### BACKGROUND OF THE INVENTION

In recent years, the development of solid-state batteries has become a mainstream trend due to increasing emphasis on safety and energy density. While solid-state batteries show promise for improving upon traditional lithium batteries, there is still room for further enhancements. In terms of cathode materials, high-nickel cathode materials are known to be sensitive to moisture. As for solid electrolytes, it is a challenging task to reduce their thickness while improving their mechanical properties.

US 2022/216507 A1 discloses a solid electrolyte material for a lithium secondary battery, an electrode, and a battery, relating in particular to an additive material capable of improving rapid transmission of ions in lithium secondary battery electrodes, a preparation method therefor and application thereof, and a solid electrolyte material for a secondary battery, a preparation method therefor and application thereof, as well as an electrode, an electrolyte thin layer, and a preparation method therefor.

Wang Jing et al.: High Lithium-Ion Conductivity, Halide-Coated, Ni-Rich NCM Improves Cycling Stability in Sulfide All-Solid-State Batteries", ACS APPLIED ENERGIE MATERIALS, vol. 6, no. 7, pages 3671-3681 discloses a halide electrolyte coating with high lithium-ion conductivity obtained by mechanical coating under n-heptane solvent and annealing at 200 °C of Ni-rich LiNi_{0.83}Co_{0.14}Mn_{0.03}O₂ (NCM) for Li₆PS₅Cl-type all-solid-state batteries. A 10% Li₃InCl₆-coated NCM material was assembled into a 10% LIC@NCM/Li₆PS₅Cl/In all-solid-state battery with an initial charge capacity of 201.3 mAh g⁻¹, a discharge specific capacity of 158.7 mAh g⁻¹, and a Coulombic efficiency of 79.06%. After 100 cycles at room temperature at 0.1C current density, the capacity retention was 92% and the capacity retention was 72% after 270 cycles. In comparison, all-solid-state batteries using matched Li₆PS₅Cl and untreated NCM had a capacity retention rate of 53% after 100 cycles at 0.1C under the same charge/discharge regime and environment. It is indicated that the cycling performance and rate performance of the NCM material significantly improve after the 10% LIC coating. In this paper, X-ray diffraction (XRD), X-ray absorption spectroscopy (XAS), X-ray photoelectron spectroscopy (XPS), high-resolution high-resolution transmission electron microscopy (HR-TEM), scanning electron microscopy (SEM), and other tests and analyses confirmed the following: the pregenerated interfacial layer of approximately 2 nm on the surface of NCM after the 10% halide solid electrolyte coating improves the structural stability of the material during charging and discharging, the LIC coating layer slows down the decomposition of LI₆PS₅Cl during cycling, and the capacity increase at high rates is due to the reduction of the interfacial impedance between the cathode material and LI₆PS₅Cl solid electrolyte.

Among different types of solid-state electrolytes, oxide solid electrolytes, sulfide solid electrolytes, and halide solid electrolytes have emerged as the most promising options for mass production. Particularly, the halide solid electrolytes have received significant attention in recent years due to their remarkable properties such as high stability, safety, ion conductivity, and low interfacial impedance. However, similar to high-nickel cathode materials, halide solid electrolytes are also sensitive to moisture. Moreover, the electrochemical performance of the widely used Li₃InCl₆ in halide solid electrolytes has room for improvement.

Therefore, there is a need to provide a cathode material and a preparation method thereof for obtaining a solid electrolyte coating layer through an organic solvent, thereby eliminating the adverse effects of moisture on the cathode material and enhancing the electrochemical performance.

### SUMMARY OF THE INVENTION

An object of the present disclosure is to provide a cathode material having a solid electrolyte coating layer obtained through an organic solvent, thereby eliminating the adverse effects of moisture on the cathode material and enhancing the electrochemical performance. The cathode material includes a plurality of particles. Each of the plurality of particles includes a core layer and a coating layer coated thereon. The core layer includes a lithium metal oxide material having a composition of Li[NiₐCo_{b}Mn_{c}Al_{d}]O₂. The coefficient "a" satisfies the conditions of 0.8<a<1. By incorporating the core layer with high nickel content, the low-cost cathode material with high energy density is achieved. The coating layer of the cathode material includes a solid electrolyte having a composition of Li₃InClₓF_{y}. The incorporation of chlorine and fluorine in the solid electrolyte further results in the cathode material with high discharge capacity and high discharge capacity retention. The coefficients "x" and "y" satisfy the conditions of 4≤x≤5.5 and 0.5≤y≤2. By controlling the amount ratio of chlorine and fluorine in the solid electrolyte, the electrochemical performance of the cathode material is enhanced. The lithium metal oxide material in the core layer and the solid electrolyte in the coating layer have a weight ratio ranged from 1:0.3 to 1:0.6, resulting in the cathode material with a uniform core-shell structure.

Another object of the present disclosure is to provide a preparation method of a cathode material for obtaining a solid electrolyte coating layer through an organic solvent, thereby eliminating the adverse effects of moisture on the cathode material and enhancing the electrochemical performance. A lithium metal oxide material, a first material and an organic solvent are mixed and heat-treated to form the cathode material. Compared to dry mixing, wet mixing using the organic solvent offers cost efficiency and easy controllability. It not only enhances the solid dispersion of the cathode material but also eliminates the adverse effects of moisture. Furthermore, through wet mixing, the first material is reacted and undergoes an in-situ synthesis on the surface of the cathode material particles, resulting in the formation of a solid electrolyte. This leads to the formation of the cathode material with a uniform core-shell structure, thereby enhancing the electrochemical performance. The heat treatment has a temperature ranged from 100 °C to 250 °C, ensuring that the preparation method of the cathode material is energy-efficient, cost-effective and environmentally friendly.

To achieve the abovementioned object, a cathode material including a plurality of particles according to appended claim 1 is provided. Each of the plurality of particles includes a core layer and a coating layer. The core layer includes a lithium metal oxide material. The lithium metal oxide material has a composition of Li[NiₐCo_{b}Mn_{c}Al_{d}]O₂. The coefficients "a", "b", "c", and "d" satisfy the conditions of a+b+c+d=1, 0.8<a<1, 0<b<1, 0≤c<1, and 0≤d<1. The coating layer is coated on the core layer and includes a solid electrolyte. A first material is reacted on the core layer to in-situ synthesize the solid electrolyte. The solid electrolyte has a composition of Li₃InClₓF_{y}. The coefficients "x" and "y" satisfy the conditions of x+y=6, 4≤x≤5.5, and 0.5≤y≤2. The lithium metal oxide material, the first material, and a solvent are mixed to form a precursor. The precursor is heat-treated to form the cathode material. The first material includes lithium, indium, chlorine, and fluorine. The lithium metal oxide material and the solid electrolyte have a weight ratio ranged from 1:0.3 to 1:0.6.

In an embodiment, the coefficient "a" satisfies the condition of 0.9<a<1.

In an embodiment, the lithium metal oxide material and the solid electrolyte have a weight ratio ranged from 1:0.4 to 1:0.5.

In an embodiment, each of the plurality of particles has a particle size, and the coating layer has a thickness. The particle size and the thickness have a ratio ranged from 6:1 to 40:1.

In an embodiment, the particle size is ranged from 5 µm to 20 µm, and the thickness is ranged from 0.5 µm to 3 µm.

In an embodiment, the first material comprises lithium chloride (LiCl), lithium fluoride (LiF) and indium chloride (InCl₃).

In an embodiment, the solvent includes a volatile organic solvent.

In an embodiment, the precursor is heat-treated in a vacuum environment or an inert atmosphere to form the cathode material.

In an embodiment, the precursor is heat-treated at a temperature to form the cathode material. The temperature is ranged from 100 °C to 250 °C.

To further achieve the abovementioned object, a preparation method of a cathode material according to appended claim 8 is provided. The preparation method includes steps of: (a) providing a lithium metal oxide material having a composition of Li[NiₐCo_{b}Mn_{c}Al_{d}]O₂, wherein a+b+c+d=1, 0.8<a<1, 0<b<1, 0≤c<1, and 0≤d<1; (b) mixing the lithium metal oxide material with a first material and a solvent to form a precursor, wherein the first material includes lithium, indium, chlorine, and fluorine; and (c) heat-treating the precursor to form the cathode material comprising a plurality of particles, wherein each of the plurality of particles includes a core layer and a coating layer coated on the core layer, the core layer includes the lithium metal oxide material, and the coating layer includes a solid electrolyte having a composition of Li₃InClₓF_{y}, wherein x+y=6, 4≤x≤5.5, and 0.5≤y≤2, and the first material is reacted on the core layer to form the solid electrolyte, wherein the lithium metal oxide material and the solid electrolyte have a weight ratio ranged from 1:0.3 to 1:0.6.

In an embodiment, the coefficient "a" satisfies the condition of 0.9<a<1.

In an embodiment, the lithium metal oxide material and the solid electrolyte have a weight ratio ranged from 1:0.4 to 1:0.5.

In an embodiment, each of the plurality of particles has a particle size, and the coating layer has a thickness. The particle size and the thickness have a ratio ranged from 6:1 to 40:1.

In an embodiment, the particle size is ranged from 5 µm to 20 µm, and the thickness is ranged from 0.5 µm to 3 µm.

In an embodiment, the first material comprises lithium chloride (LiCl), lithium fluoride (LiF), and indium chloride (InCl₃).

In an embodiment, the solvent includes a volatile organic solvent.

In an embodiment, the precursor is heat-treated in a vacuum environment or an inert atmosphere to form the cathode material.

In an embodiment, the precursor is heat-treated at a temperature to form the cathode material. The temperature is ranged from 100 °C to 250 °C.

### BRIEF DESCRIPTION OF THE DRAWINGS

FIG. 1 is a schematic diagram of a cathode material particle according to an embodiment of the present disclosure;
FIG. 2 is a cross-sectional SEM image of cathode material particles according to an embodiment of the present disclosure;
FIG. 3 is a flow chart of a preparation method of a cathode material according to an embodiment of the present disclosure;
FIGS. 4A and 4B are SEM images of a cathode material according to a first demonstrative example of the present disclosure;
FIGS. 5A and 5B are SEM images of a cathode material according to a second demonstrative example of the present disclosure;
FIGS. 6A and 6B are SEM images of a cathode material according to a third demonstrative example of the present disclosure;
FIGS. 7A and 7B are SEM images of a cathode material according to a comparative example of the present disclosure;
FIG. 8A is a plot of discharge capacity vs. cycle number according to the first demonstrative example of the present disclosure;
FIG. 8B is a plot of discharge capacity vs. cycle number according to the second demonstrative example of the present disclosure;
FIG. 8C is a plot of discharge capacity vs. cycle number according to the third demonstrative example of the present disclosure;
FIG. 8D is a plot of discharge capacity vs. cycle number according to the comparative example of the present disclosure;
FIG. 9A is a plot of discharge capacity retention vs. cycle number according to the first demonstrative example of the present disclosure;
FIG. 9B is a plot of discharge capacity retention vs. cycle number according to the second demonstrative example of the present disclosure;
FIG. 9C is a plot of discharge capacity retention vs. cycle number according to the third demonstrative example of the present disclosure; and
FIG. 9D is a plot of discharge capacity retention vs. cycle number according to the comparative example of the present disclosure.

### DETAILED DESCRIPTION OF THE PREFERRED EMBODIMENT

The present disclosure will now be described more specifically with reference to the following embodiments. It is to be noted that the following descriptions of preferred embodiments of this disclosure are presented herein for purpose of illustration and description only. It is not intended to be exhaustive or to be limited to the precise form disclosed. In addition, although the "first," "second," "third," and the like terms in the claims be used to describe the various elements can be appreciated, these elements should not be limited by these terms, and these elements are described in the respective embodiments are used to express the different reference numerals, these terms are only used to distinguish one element from another element. For example, a first element could be termed a second element, and, similarly, a second element could be termed a first element, without departing from the scope of example embodiments. Besides, "and/or" and the like may be used herein for including any or all combinations of one or more of the associated listed items. Alternatively, the word "about" means within an acceptable standard error of ordinary skill in the art-recognized average. In addition to the operation / working examples, or unless otherwise specifically stated otherwise, in all cases, all of the numerical ranges, amounts, values and percentages, such as the number for the herein disclosed materials, time duration, temperature, operating conditions, the ratio of the amount, and the like, should be understood as the word "about" decorator. Accordingly, unless otherwise indicated, the numerical parameters of the present invention and scope of the appended patent proposed is to follow changes in the desired approximations. At least, the number of significant digits for each numerical parameter should at least be reported and explained by conventional rounding technique is applied. Herein, it can be expressed as a range between from one endpoint to the other or both endpoints. Unless otherwise specified, all ranges disclosed herein are inclusive.

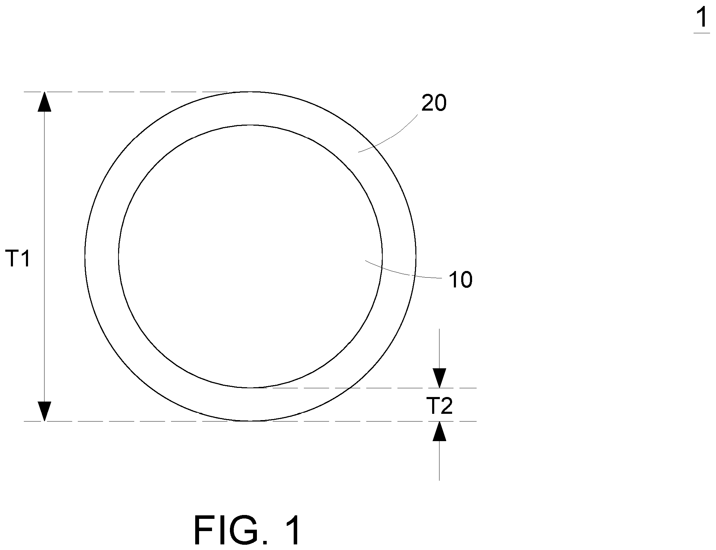

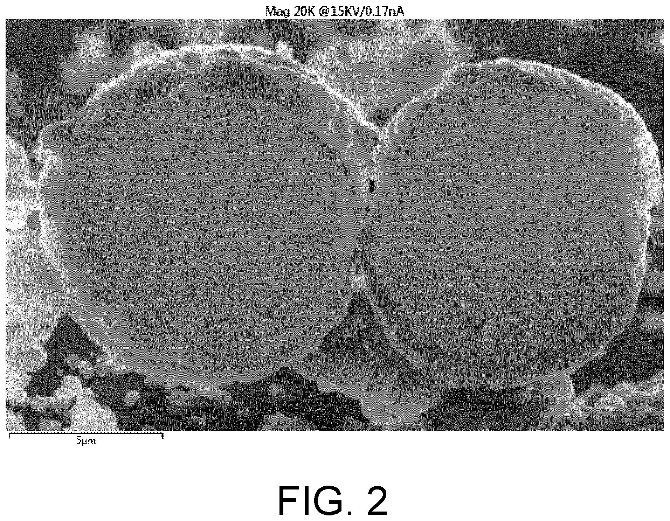

FIG. 1 is a schematic diagram of a cathode material particle according to an embodiment of the present disclosure. FIG. 2 is a cross-sectional SEM image of cathode material particles according to an embodiment of the present disclosure. FIG. 2 is obtained by a Focused ion beam scanning electron microscopy (FIB-SEM). In the embodiment, the cathode material includes a plurality of particles 1. Each of the plurality of particles 1 includes a core layer 10 and a coating layer 20. The core layer 10 includes a lithium metal oxide material. The lithium metal oxide material has a composition of Li[NiₐCo_{b}Mn_{c}Al_{d}]O₂. The coefficients "a", "b", "c", and "d" satisfy the conditions of a+b+c+d=1, 0.8<a<1, 0<b<1, 0≤c<1, and 0≤d<1. The coating layer 20 is coated on the core layer 10 and includes a solid electrolyte. A first material is reacted on the core layer 10 to in-situ synthesize the solid electrolyte. The solid electrolyte has a composition of Li₃InClₓF_{y}. The coefficients "x" and "y" satisfy the conditions of x+y=6, 4≤x≤5.5 and 0.5≤y≤2. The lithium metal oxide material, the first material, and a solvent are mixed to form a precursor. The precursor is heat-treated to form the cathode material. The first material includes lithium, indium, chlorine, and fluorine. The lithium metal oxide material and the solid electrolyte have a weight ratio ranged from 1:0.3 to 1:0.6. The incorporation of chlorine and fluorine in the solid electrolyte results in the cathode material with high discharge capacity and high discharge capacity retention. In the embodiment, preferably but not exclusively, the lithium metal oxide material includes a lithium nickel cobalt manganese oxide (NCM) material having a composition of Li[NiₐCo_{b}Mn_{c}]O₂. The coefficients "a", "b", and "c" satisfy the conditions of a=0.83, b=0.12, and c=0.05. These values indicate that nickel, cobalt and manganese in the NCM material have an amount ratio of 83: 12:5. Preferably but not exclusively, the lithium nickel cobalt manganese oxide material is prepared by a solid-state synthesis method. In other embodiments, the lithium metal oxide material includes a lithium nickel cobalt manganese oxide (NCM) material with a different amount ratio, a lithium nickel cobalt aluminum oxide (NCA) material having a composition of Li[NiₐCo_{b}Al_{d}]O₂, or a lithium nickel cobalt manganese aluminum oxide (NCMA) material having a composition of Li[NiₐCo_{b}Mn_{c}Al_{d}]O₂, and is prepared by a sol-gel process. In an embodiment, preferably but not exclusively, the lithium metal oxide material has a composition of Li[NiₐCo_{b}Mn_{c}Al_{d}]O₂, and the coefficients "a" satisfies the condition of 0.9<a<1. This condition indicates that the proportion of nickel in the metallic elements other than lithium in the lithium metal oxide material is more than 90%. Preferably but not exclusively, the lithium metal oxide material includes a lithium nickel cobalt manganese aluminum oxide (NCMA) material having a composition of Li[NiₐCo_{b}Mn_{c}Al_{d}]O₂. The coefficients "a", "b", "c", and "d" satisfy the conditions of a=0.93, b=0.03, c=0.03, and d=0.01. These values indicate that nickel, cobalt, manganese and aluminum in the NCMA material have an amount ratio of 93:3:3:1. By incorporating the core layer 10 with high nickel content, the low-cost cathode material with high energy density is achieved. It should be noted that the types, the composition, and the preparation processes of the lithium metal oxide material are adjustable according to the practical requirements. The present disclosure is not limited thereto, and not redundantly described herein.

Preferably but not exclusively, in the composition of Li₃InClₓF_{y}, the coefficients "x" and "y" further satisfy the conditions of 4≤x≤5.5 and 0.5≤y≤2. These conditions indicate that chlorine and fluorine have an amount ratio ranged from 5.5:0.5 to 4:2. By controlling the amount ratio of chlorine and fluorine in the solid electrolyte, the electrochemical performance of the cathode material is enhanced. Even more preferably, the amount ratio of chlorine to fluorine is ranged from 5.3:0.7 to 4.5:1.5. The present disclosure is not limited thereto.

In an embodiment, preferably but not exclusively, the lithium metal oxide material and the solid electrolyte have a weight ratio ranged from 1:0.4 to 1:0.5, resulting in the cathode material with a uniform core-shell structure. As shown in FIG. 2, each of the plurality of the particles 1 includes a particle size T1, and the coating layer 20 has a thickness T2. The particle size T1 and the thickness T2 have a ratio ranged from 6:1 to 40:1. The particle size T1 is ranged from 5 µm to 20 µm, and the thickness T2 is ranged from 0.5 µm to 3 µm.

In the embodiment, the first material comprises lithium chloride (LiCl), lithium fluoride (LiF) and indium chloride (InCl3). The solvent is a volatile organic solvent. Compared to dry mixing, wet mixing using the organic solvent offers cost efficiency and easy controllability. It not only enhances the solid dispersion of the cathode material but also eliminates the adverse effects of moisture. Furthermore, through wet mixing, the first material is reacted and undergoes an in-situ synthesis on the surface of the cathode material particles, resulting in the formation of a solid electrolyte. This leads to the formation of the cathode material with a uniform core-shell structure, thereby enhancing the electrochemical performance. In the first material, lithium, indium, and halogen elements (the sum of chlorine and fluorine) have an amount ratio of 3:1:6. Preferably but not exclusively, the volatile organic solvent is an ethanol. However, it should be noted that other volatile organic solvents that do not react with the lithium metal oxide material and the first material are also suitable, and their description is not redundantly described herein. In the embodiment, the lithium metal oxide material, the first material, a conductive additive, a binder, and the solvent are mixed and reacted to form the precursor. The lithium metal oxide material, the first material, the conductive additive, the binder, and the solvent are reacted in a vacuum environment or an inert atmosphere to form the cathode material. Preferably but not exclusively, the conductive additive includes a nano carbon tube, a conductive graphite, a conductive carbon black, an acetylene black, or a vapor grown carbon fiber (VGCF). The binder includes a polyvinylidene difluoride (PVDF) or a polytetrafluoroethene (PTFE). The vacuum environment is in a reaction flask having a pressure less than or equal to 10⁻³ torr. The inert atmosphere is an argon atmosphere or a nitrogen atmosphere. The present disclosure is not limited thereto.

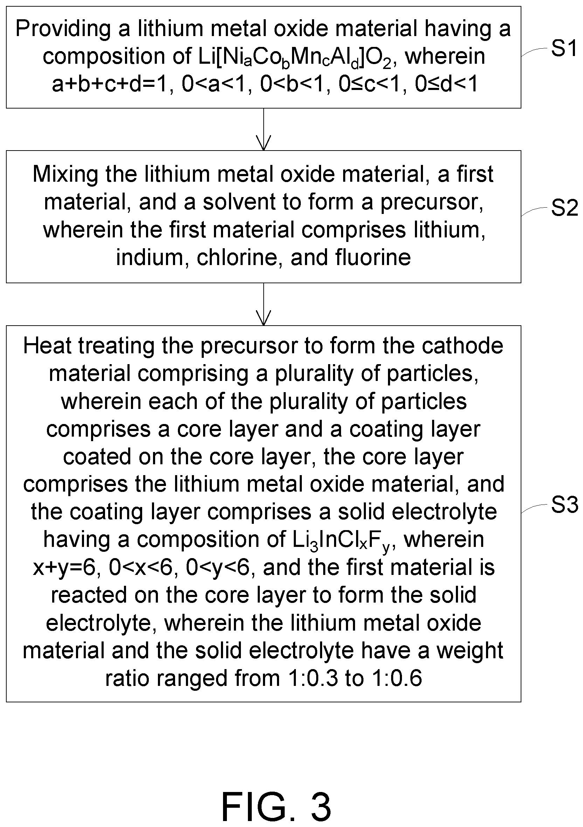

According to the aforementioned cathode material, a preparation for the cathode material is provided. FIG. 3 is a flow chart of a preparation method of a cathode material according to an embodiment of the present disclosure. First, as show in the step S1, a lithium metal oxide material is provided. The lithium metal oxide material has a composition of Li[NiₐCo_{b}Mn_{c}Al_{d}]O₂. The coefficients "a", "b", "c", and "d" satisfy the conditions of a+b+c+d=1, 0.8<a<1, 0<b<1, 0≤c<1, and 0≤d<1. In the embodiment, preferably but not exclusively, the lithium metal oxide material includes a lithium nickel cobalt manganese oxide (NCM) material having a composition of Li[NiₐCo_{b}Mn_{c}]O₂. The coefficients "a", "b", and "c" satisfy the conditions of a=0.83, b=0.12, and c=0.05. These values indicate that nickel, cobalt and manganese in the NCM material have an amount ratio of 83: 12:5. Preferably but not exclusively, the lithium nickel cobalt manganese oxide material is prepared by a solid-state synthesis method. In other embodiments, the lithium metal oxide material includes a lithium nickel cobalt manganese oxide (NCM) material with a different composition ratio, a lithium nickel cobalt aluminum oxide (NCA) material having a composition of Li[NiₐCo_{b}Al_{d}]O₂, or a lithium nickel cobalt manganese aluminum oxide (NCMA) material having a composition of Li[NiₐCo_{b}Mn_{c}Al_{d}]O₂, and is prepared by a sol-gel process. In an embodiment, preferably but not exclusively, the lithium metal oxide material has a composition of Li[NiₐCo_{b}Mn_{c}Al_{d}]O₂, and the coefficients "a" satisfies the condition of 0.9<a<1. This condition indicates that the proportion of nickel in the metallic elements other than lithium in the lithium metal oxide material is more than 90%. Preferably but not exclusively, the lithium metal oxide material includes a lithium nickel cobalt manganese aluminum oxide (NCMA) material having a composition of Li[NiₐCo_{b}Mn_{c}Al_{d}]O₂. The coefficients "a", "b", "c", and "d" satisfy the conditions of a=0.93, b=0.03, c=0.03, and d=0.01. These values indicate that nickel, cobalt, manganese and aluminum in the NCMA material have an amount ratio of 93:3:3:1. By incorporating the core layer 10 with high nickel content, the low-cost cathode material with high energy density is achieved. It should be noted that the types, the composition ratios, and the preparation processes of the lithium metal oxide material are adjustable according to the practical requirements. The present disclosure is not limited thereto, and not redundantly described herein.

After that, as shown in the step S2, the lithium metal oxide material, the first material, and a solvent are mixed to form a precursor. The first material includes lithium, indium, chlorine, and fluorine. The first material comprises lithium chloride (LiCl), lithium fluoride (LiF) and indium chloride (InCl3). The solvent is a volatile organic solvent. Compared to dry mixing, wet mixing using the organic solvent offers cost efficiency and easy controllability. It not only enhances the solid dispersion of the cathode material but also eliminates the adverse effects of moisture. Furthermore, through wet mixing, the first material is reacted and undergoes an in-situ synthesis on the surface of the cathode material particles, resulting in the formation of a solid electrolyte. This leads to the formation of the cathode material with a uniform core-shell structure, thereby enhancing the electrochemical performance. In the first material, lithium, indium, and halogen elements (the sum of chlorine and fluorine) have an amount ratio of 3:1:6. Preferably but not exclusively, the volatile organic solvent is an ethanol. However, it should be noted that other volatile organic solvents that do not react with the lithium metal oxide material and the first material are also suitable, and their description is not redundantly described herein. In the embodiment, the lithium metal oxide material, the first material, a conductive additive, a binder, and the solvent are mixed and reacted to form the precursor. The lithium metal oxide material, the first material, the conductive additive, the binder, and the solvent are reacted in a vacuum environment or an inert atmosphere to form the precursor. Preferably but not exclusively, the conductive additive includes a nano carbon tube, a conductive graphite, a conductive carbon black, an acetylene black, or a vapor grown carbon fiber (VGCF). The binder includes a polyvinylidene difluoride (PVDF) or a polytetrafluoroethene (PTFE). The vacuum environment is in a reaction flask having a pressure less than or equal to 10⁻³ torr. The inert atmosphere is an argon atmosphere or a nitrogen atmosphere. The present disclosure is not limited thereto.

Finally, as shown in the step S3, the precursor is heat-treated to form the cathode material including a plurality of particles 1. Each of the plurality of particles 1 includes a core layer 10 and a coating layer 20. The core layer 10 includes the lithium metal oxide material. The coating layer is coated on the core layer and includes a solid electrolyte. The first material is reacted on the core layer 20 to in-situ synthesize the solid electrolyte. The solid electrolyte has a composition of Li₃InClₓF_{y}. The coefficients "x" and "y" satisfy the conditions of x+y=6, 4≤x≤5.5, and 0.5≤y≤2. . The lithium metal oxide material and the solid electrolyte have a weight ratio ranged from 1:0.3 to 1:0.6. Preferably but not exclusively, the precursor is heat-treated in a vacuum environment or an inert atmosphere to form the cathode material. The vacuum environment is in a reaction flask having a pressure less than or equal to 10⁻³ torr. The inert atmosphere is an argon atmosphere or a nitrogen atmosphere. The present disclosure is not limited thereto. The precursor is heat-treated at a temperature ranged from 100 °C to 250 °C. Preferably but not exclusively, the temperature is ranged from 160 °C to 200 °C, ensuring that the preparation method of the cathode material is energy-efficient, cost-effective and environmentally friendly. In the embodiment, the precursor is uniformly coated on a metal foil and hot treated, and then cut to form the cathode sheet.

Preferably but not exclusively, in the composition of Li₃InClₓF_{y}, the coefficients "x" and "y" further satisfy the conditions of 4≤x≤5.5 and 0.5≤y≤2. These conditions indicate that chlorine and fluorine have an amount ratio ranged from 5.5:0.5 to 4:2. By controlling the amount ratio of chlorine and fluorine in the solid electrolyte, the electrochemical performance of the cathode material is enhanced. Even more preferably, the amount ratio of chlorine to fluorine is ranged from 5.3:0.7 to 4.5:1.5. The present disclosure is not limited thereto. In an embodiment, preferably but not exclusively, the lithium metal oxide material and the solid electrolyte have a weight ratio ranged from 1:0.4 to 1:0.5, resulting in the cathode material with a uniform core-shell structure. Each of the plurality of the particles 1 includes a particle size T1, and the coating layer 20 has a thickness T2. The particle size T1 and the thickness T2 have a ratio ranged from 6:1 to 40:1. The particle size T1 is ranged from 5 µm to 20 µm, and the thickness T2 is ranged from 0.5 µm to 3 µm.

The preparation process and the effects of the present disclosure are further described in detail below through a comparative example and demonstrative examples.

### First demonstrative example

The first demonstrative example is a cathode material prepared through the following steps. First, a lithium metal oxide material is provided. The lithium metal oxide material has a composition of Li[NiₐCo_{b}Mn_{c}]O₂. The coefficients "a", "b", and "c" satisfy the conditions of a=0.82, b=0.13, and c=0.05. This indicates that the lithium metal oxide material is a lithium nickel cobalt manganese oxide material, where nickel, cobalt and manganese have an amount ratio of 83:12:5.

After that, 0.68 grams of lithium metal oxide material, 0.3 grams of first material, 0.02 grams of vapor grown carbon fiber (VGCF), 0.01 grams of polytetrafluoroethene (PTFE), and 3 milliliters of ethanol are mixed and ground at a temperature of 120 °C to form a precursor. The first material of the first demonstrative example includes 0.083 grams of lithium chloride (LiCl), 0.0189 grams of lithium fluoride (LiF), and 0.199 grams of indium chloride (InCl₃). This indicates that in the first material, lithium, indium, chloride, and fluoride have an amount ratio of 3:1:5.19:0.81.

Finally, the precursor is heat-treated to form the cathode material. The precursor is heat-treated in an argon atmosphere at a temperature of 180 °C for a duration of 2 hours.

### Second demonstrative example

The preparation method of the second demonstrative example is roughly similar to that of the first demonstrative example. The first material of the second demonstrative example includes 0.068 grams of lithium chloride (LiCl), 0.029 grams of lithium fluoride (LiF), and 0.203 grams of indium chloride (InCl₃). This indicates that in the first material, lithium, indium, chloride, and fluoride have an amount ratio of 3:1:4.77:1.23.

### Third demonstrative example

The preparation method of the third demonstrative example is roughly similar to that of the first demonstrative example. The first material of the third demonstrative example includes 0.053 grams of lithium chloride (LiCl), 0.04 grams of lithium fluoride (LiF), and 0.207 grams of indium chloride (InCl₃). This indicates that in the first material, lithium, indium, chloride, and fluoride have an amount ratio of 3:1:4.35:1.65.

### Comparative example

The preparation method of the comparative example is roughly similar to that of the first demonstrative example. The first material of the comparative example includes 0.11 grams of lithium chloride (LiCl) and 0.19 grams of indium chloride (InCl₃). This indicates that the first material does not include fluoride, and lithium, indium, and chloride have an amount ratio of 3:1:4.35:1.65.

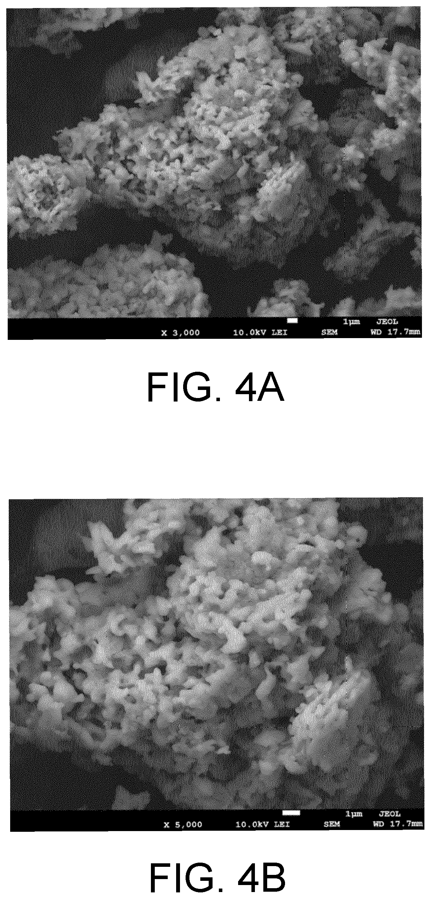

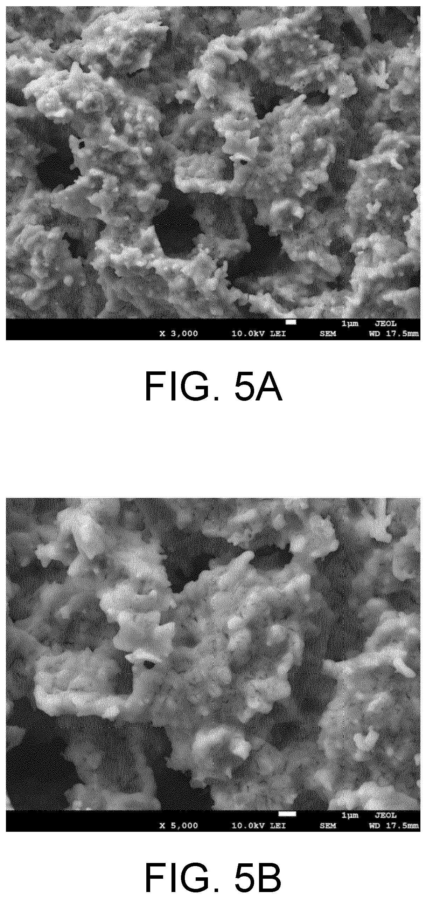

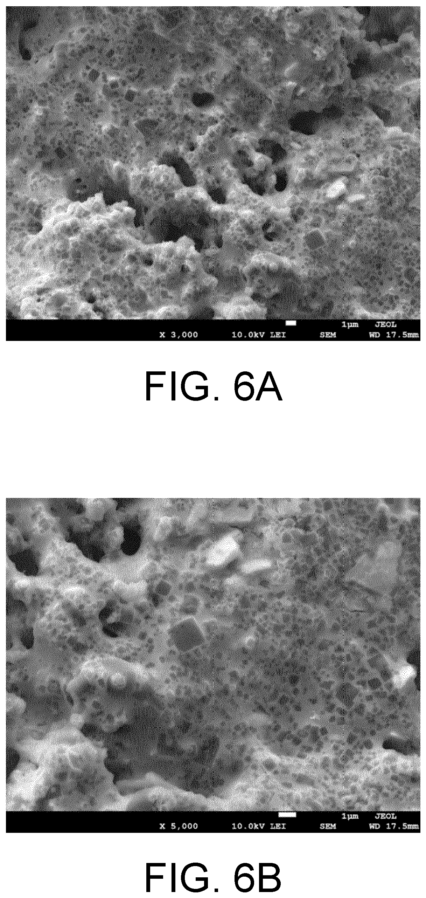

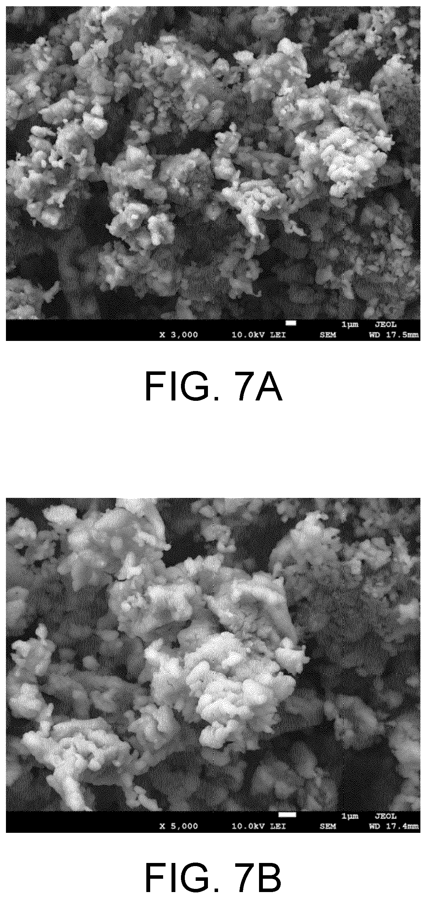

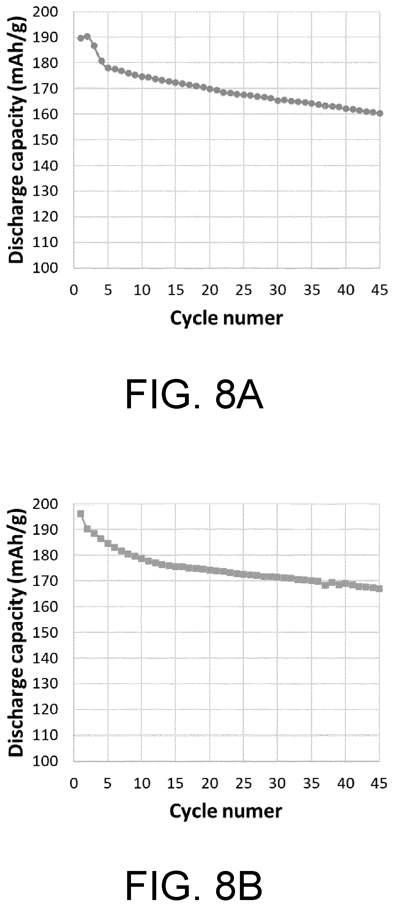

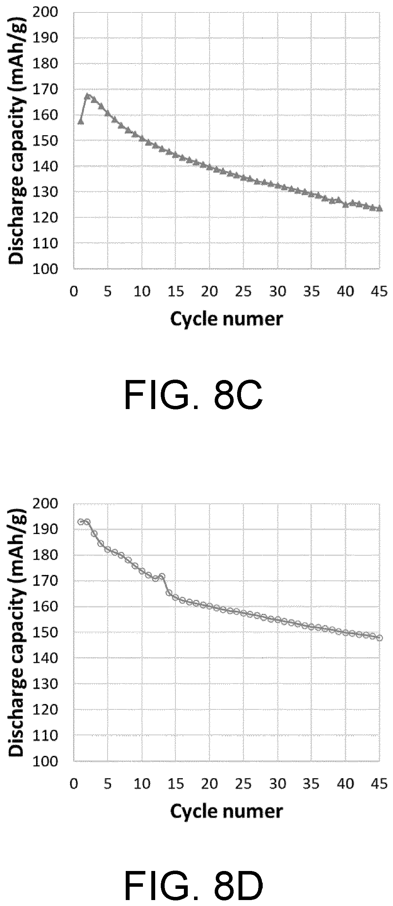

FIGS. 4A and 4B are SEM images of a cathode material according to a first demonstrative example of the present disclosure. FIGS. 5A and 5B are SEM images of a cathode material according to a second demonstrative example of the present disclosure. FIGS. 6A and 6B are SEM images of a cathode material according to a third demonstrative example of the present disclosure. FIGS. 7A and 7B are SEM images of a cathode material according to a comparative example of the present disclosure. FIGS. 8A to 8D are plots of discharge capacity vs. cycle number for button cells made using the first demonstrative example, the second demonstrative example, the third demonstrative example and the comparative example of the present disclosure. Table 1 below shows the discharge capacity at the first cycle and the forty-fifth cycle for the button cells made using the first demonstrative example, the second demonstrative example, the third demonstrative example and the comparative example. The cathode of each button cells is made using the first demonstrative example, the second demonstrative example, the third demonstrative example and the comparative example, respectively. The anode of each button cells is made using lithium. The button cells undergo testing under specific conditions, including a voltage window ranging from 2.5 V to 4.4 V, a C-rate of 0.1 C, and a temperature of 55 °C. The button cells are charged by a constant current (CC) method and discharged by a constant current constant voltage (CCCV) method. During the constant current constant voltage (CCCV) discharging, the button cells are discharged at a constant current until they reach a specified voltage limit. Once the voltage limit is reached, the button cells are then discharged at a constant voltage until they are fully discharged. As shown in FIGS. 8A to 8D and Table 1, during the first cycle, the discharge capacity of the second demonstrative example is 196.18 mAh/g, slightly higher than the discharge capacity of the comparative example. In the second demonstrative example, chlorine and fluorine has an amount ratio of 4.77:1.23. On the other hand, the discharge capacity of the first demonstrative example is 189.49 mAh/g, slightly lower than the discharge capacity of the comparative example. However, the differences are not significant. In the first demonstrative example, chlorine and fluorine has an amount ratio of 5.19:0.81. During the forty-fifth cycle, the discharge capacity of the first demonstrative example is 160.21 mAh/g, showing an improvement of 8.31% compared to the discharge capacity of the comparative example, which is 147.91 mAh/g. The discharge capacity of the second demonstrative example is 166.90 mAh/g, showing an improvement of 12.83% compared to the discharge capacity of the comparative example, which is 147.91 mAh/g. Based on the results, it can be inferred that the incorporation of chlorine and fluorine in the solid electrolyte results in the cathode material with high discharge capacity. Preferably, the solid electrolyte formulated with a chlorine-to-fluorine amount ratio ranged from 5.3:0.7 to 4.5:1.5 demonstrates superior performance.

**Table 1**

| | 1st Cycle Discharge Capacity (mAh/g) | 45th Cycle Discharge Capacity (mAh/g) |
|---|---|---|
| First Demonstrative Example | 189.49 | 160.21 |
| Second Demonstrative Example | 196.18 | 166.90 |
| Third Demonstrative Example | 157.60 | 123.62 |
| Comparative Example | 192.97 | 147.91 |

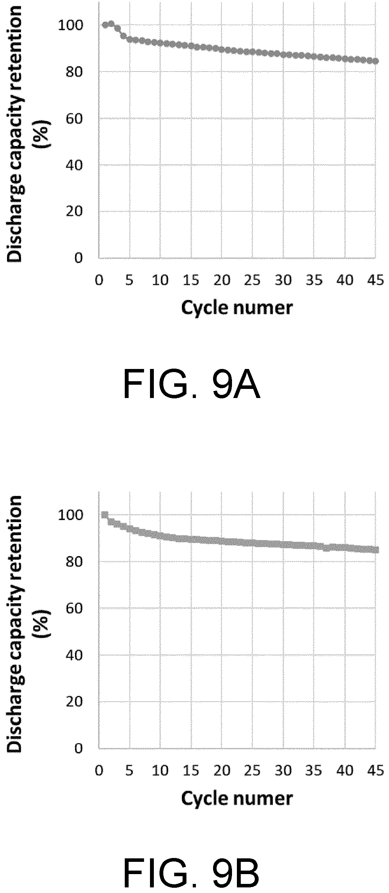

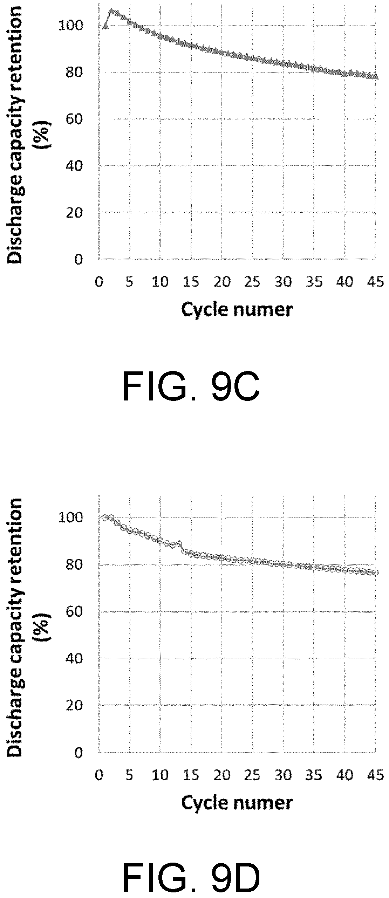

FIGS. 9A to 9D are plots of discharge capacity retention vs. cycle number for button cells made using the first demonstrative example, the second demonstrative example, the third demonstrative example and the comparative example of the present disclosure. Table 2 below shows the discharge capacity retention at the forty-fifth cycle for the button cells made using the first demonstrative example, the second demonstrative example, the third demonstrative example and the comparative example. As shown in FIGS. 9A to 9D and Table 2, during the forty-fifth cycle, the discharge capacity retention of the first demonstrative example is 84.55 %, showing an improvement of 10.31 % compared to the discharge capacity of the comparative example, which is 76.65 %. The discharge capacity of the second demonstrative example is 85.07 %, showing an improvement of 10.98 % compared to the discharge capacity of the comparative example, which is 76.65 %. The discharge capacity of the second demonstrative example is 166.90 mAh/g, showing an improvement of 2.34 % compared to the discharge capacity of the comparative example, which is 76.65 %. Based on the results, it can be inferred that the incorporation of chlorine and fluorine in the solid electrolyte results in the cathode material with high discharge capacity retention. Preferably, the solid electrolyte formulated with a chlorine-to-fluorine amount ratio ranged from 5.3:0.7 to 4.5:1.5 demonstrates superior performance.

**Table 2**

| | 45th Cycle Discharge Capacity Retention |
|---|---|
| First Demonstrative Example | 84.55 % |
| Second Demonstrative Example | 85.07 % |
| Third Demonstrative Example | 78.44 % |
| Comparative Example | 76.65% |

In summary, the present disclosure provides a cathode material and a preparation method thereof for obtaining a solid electrolyte coating through an organic solvent, thereby eliminating the adverse effects of moisture on the cathode material and enhancing the electrochemical performance. The cathode material includes a plurality of particles. Each of the plurality of particles includes a core layer and a coating layer coated thereon. The core layer includes a lithium metal oxide material having a composition of Li[NiₐCo_{b}Mn_{c}Al_{d}]O₂. The coefficient "a" satisfies the conditions of 0.8<a<1. By incorporating the core layer with high nickel content, the low-cost cathode material with high energy density is achieved. The coating layer of the cathode material includes a solid electrolyte having a composition of Li₃InClₓF_{y}. The incorporation of chlorine and fluorine in the solid electrolyte further results in the cathode material with high discharge capacity and high discharge capacity retention. The coefficients "x" and "y" satisfy the conditions of 4≤x≤5.5 and 0.5≤y≤2. By controlling the amount ratio of chlorine and fluorine in the solid electrolyte, the electrochemical performance of the cathode material is enhanced. The lithium metal oxide material in the core layer and the solid electrolyte in the coating layer have a weight ratio ranged from 1:0.3 to 1:0.6, resulting in the cathode material with a uniform core-shell structure. The lithium metal oxide material, a first material and an organic solvent are mixed and heat-treated to form the cathode material. Compared to dry mixing, wet mixing using the organic solvent offers cost efficiency and easy controllability. It not only enhances the solid dispersion of the cathode material but also eliminates the adverse effects of moisture. Furthermore, through wet mixing, the first material is reacted and undergoes an in-situ synthesis on the surface of the cathode material particles, resulting in the formation of a solid electrolyte. This leads to the formation of the cathode material with a uniform core-shell structure, thereby enhancing the electrochemical performance. The heat treatment has a temperature ranged from 100 °C to 250 °C, ensuring that the preparation method of the cathode material is energy-efficient, cost-effective and environmentally friendly.

## Claims

1. A cathode material comprising a plurality of particles (1), wherein each of the plurality of particles (1) is **characterized by** comprising:
a core layer (10) comprising a lithium metal oxide material, wherein the lithium metal oxide material has a composition of Li[NiₐCo_{b}Mn_{c}Al_{d}]O₂, wherein a+b+c+d=1, 0.8<a<1, 0<b<1, 0≤c<1, and 0≤d<1; and
a coating layer (20) coated on the core layer (10) and comprising a solid electrolyte, wherein the solid electrolyte is formed by a reaction of a first material on the core layer (10) and has a composition of Li₃InClₓF_{y}, x+y=6, 4≤x≤5.5, and 0.5≤y≤2, wherein the lithium metal oxide material, the first material, and a solvent are mixed to form a precursor, and the precursor is heat-treated to form the cathode material, wherein the first material comprises lithium, indium, chlorine, and fluorine, and the lithium metal oxide material and the solid electrolyte have a weight ratio ranged from 1:0.3 to 1:0.6.

2. The cathode material according to claim 1, wherein 0.9<a<1.

3. The cathode material according to claim 1, wherein the lithium metal oxide material and the solid electrolyte have a weight ratio ranged from 1:0.4 to 1:0.5.

4. The cathode material according to claim 1, wherein each of the plurality of particles (1) has a particle size (T1), and the coating layer (20) has a thickness (T2), wherein the particle size (T1) and the thickness (T2) have a ratio ranged from 6:1 to 40:1, wherein the particle size (T1) is ranged from 5 µm to 20 µm, and the thickness (T2) is ranged from 0.5 µm to 3 µm.

5. The cathode material according to claim 1, wherein the first material comprises lithium chloride (LiCl), lithium fluoride (LiF) and indium chloride (InCl₃)

6. The cathode material according to claim 1, wherein the solvent comprises a volatile organic solvent.

7. The cathode material according to claim 1, wherein the precursor is heat-treated in a vacuum environment or an inert atmosphere to form the cathode material, wherein the precursor is heat-treated at a temperature to form the cathode material, and the temperature is ranged from 100 °C to 250 °C.

8. A preparation method of a cathode material, **characterized by** comprising steps of:
(a) providing a lithium metal oxide material having a composition of Li[NiₐCo_{b}Mn_{c}Al_{d}]O₂, wherein a+b+c+d=1, 0.8<a<1, 0<b<1, 0≤c<1, and 0≤d<1;
(b) mixing the lithium metal oxide material with a first material and a solvent to form a precursor, wherein the first material comprises lithium, indium, chlorine, and fluorine; and
(c) heat-treating the precursor to form the cathode material comprising a plurality of particles (1), wherein each of the plurality of particles (1) comprises a core layer (10) and a coating layer (20) coated on the core layer (10), the core layer (10) comprises the lithium metal oxide material, and the coating layer (20) comprises a solid electrolyte having a composition of Li₃InClₓF_{y}, wherein x+y=6, 4≤x≤5.5, and 0.5≤y≤2, and the first material is reacted on the core layer (10) to form the solid electrolyte, wherein the lithium metal oxide material and the solid electrolyte have a weight ratio ranged from 1:0.3 to 1:0.6.

9. The preparation method of the cathode material according to claim 8, wherein 0.9<a<1.

10. The preparation method of the cathode material according to claim 8, wherein the lithium metal oxide material and the solid electrolyte have a weight ratio ranged from 1:0.4 to 1:0.5.

11. The preparation method of the cathode material according to claim 8, wherein each of the plurality of particles (1) has a particle size (T1), and the coating layer (20) has a thickness (T2), wherein the particle size (T1) and the thickness (T2) have a ratio ranged from 6:1 to 40:1, wherein the particle size (T1) is ranged from 5 µm to 20 µm, and the thickness (T2) is ranged from 0.5 µm to 3 µm.

12. The preparation method of the cathode material according to claim 8, wherein the first material comprises lithium chloride (LiCl), lithium fluoride (LiF), and indium chloride (InCl₃).

13. The preparation method of the cathode material according to claim 8, wherein the solvent comprises a volatile organic solvent.

14. The preparation method of the cathode material according to claim 8, wherein the precursor is heat-treated in a vacuum environment or an inert atmosphere to form the cathode material, wherein the precursor is heat-treated at a temperature to form the cathode material, and the temperature is ranged from 100 °C to 250 °C.

## Patentansprüche

1. Kathodenmaterial, umfassend eine Vielzahl von Teilchen (1), wobei jedes der Vielzahl von Teilchen (1) **dadurch gekennzeichnet ist, dass** es umfasst:
eine Kernschicht (10), die ein Lithium-Metalloxid-Material umfasst, wobei das Lithium-Metalloxid-Material eine Zusammensetzung von Li[NiₐCo_{b}Mn_{c}Al_{d}]O₂ aufweist, wobei a+b+c+d=1, 0,8<a<1, 0<b<1, 0≤c<1 und 0≤d< 1; und
eine Überzugsschicht (20), die auf die Kernschicht (10) aufgebracht ist und einen Festelektrolyten umfasst, wobei der Festelektrolyt durch eine Reaktion eines ersten Materials auf der Kernschicht (10) gebildet wird und eine Zusammensetzung von Li₃InClₓF_{y}, x+y=6, 4≤x≤5,5 und 0.5≤y≤2, wobei das Lithium-Metalloxid-Material, das erste Material und ein Lösungsmittel gemischt werden, um einen Vorläufer zu bilden, und der Vorläufer wärmebehandelt wird, um das Kathodenmaterial zu bilden, wobei das erste Material Lithium, Indium, Chlor und Fluor umfasst, und das Lithium-Metalloxid-Material und der Festelektrolyt ein Gewichtsverhältnis im Bereich von 1:0,3 bis 1:0,6 aufweisen.

2. Kathodenmaterial nach Anspruch 1, wobei 0,9<a<1.

3. Kathodenmaterial nach Anspruch 1, wobei das Lithium-Metalloxid-Material und der Festelektrolyt ein Gewichtsverhältnis im Bereich von 1:0,4 bis 1:0,5 aufweisen.

4. Kathodenmaterial nach Anspruch 1, wobei jedes der Vielzahl von Teilchen (1) eine Teilchengröße (T1) hat und die Überzugsschicht (20) eine Dicke (T2) hat, wobei die Teilchengröße (T1) und die Dicke (T2) ein Verhältnis im Bereich von 6:1 bis 40:1 haben, wobei die Teilchengröße (T1) im Bereich von 5 µm bis 20 µm liegt und die Dicke (T2) im Bereich von 0,5 µm bis 3 µm liegt.

5. Kathodenmaterial nach Anspruch 1, wobei das erste Material Lithiumchlorid (LiCl), Lithiumfluorid (LiF) und Indiumchlorid (InCl₃) umfasst.

6. Kathodenmaterial nach Anspruch 1, wobei das Lösungsmittel ein flüchtiges organisches Lösungsmittel umfasst.

7. Kathodenmaterial nach Anspruch 1, wobei der Vorläufer in einer Vakuumumgebung oder einer inerten Atmosphäre wärmebehandelt wird, um das Kathodenmaterial zu bilden, wobei der Vorläufer bei einer Temperatur wärmebehandelt wird, um das Kathodenmaterial zu bilden, und die Temperatur im Bereich von 100 °C bis 250 °C liegt.

8. Verfahren zur Herstellung eines Kathodenmaterials, **dadurch gekennzeichnet, dass** es die folgenden Schritte umfasst:
(a) Bereitstellen eines Lithiummetalloxidmaterials mit einer Zusammensetzung von Li[NiₐCo_{b}Mn_{c}Al_{d}]O₂, wobei a+b+c+d=1, 0,8<a<1, 0<b<1, 0≤c<1 und 0≤d<1;
(b) Mischen des Lithiummetalloxidmaterials mit einem ersten Material und einem Lösungsmittel, um einen Vorläufer zu bilden, wobei das erste Material Lithium, Indium, Chlor und Fluor umfasst; und
(c) Wärmebehandlung des Vorläufers, um das Kathodenmaterial zu bilden, das eine Vielzahl von Teilchen (1) umfasst, wobei jedes der Vielzahl von Teilchen (1) eine Kernschicht (10) und eine Überzugsschicht (20) umfasst, die auf die Kernschicht (10) aufgetragen ist, wobei die Kernschicht (10) das Lithium-Metalloxid-Material umfasst und die Überzugsschicht (20) einen Festelektrolyten mit einer Zusammensetzung von Li₃InClₓF_{y} umfasst, wobei x+y=6, 4≤x≤5.5 und 0,5≤y≤2 ist, und das erste Material auf der Kernschicht (10) reagiert, um den Festelektrolyten zu bilden, wobei das Lithiummetalloxidmaterial und der Festelektrolyt ein Gewichtsverhältnis im Bereich von 1:0,3 bis 1:0,6 aufweisen.

9. Verfahren zur Herstellung eines Kathodenmaterials nach Anspruch 8, wobei 0,9<a<1.

10. Verfahren zur Herstellung eines Kathodenmaterials nach Anspruch 8, wobei das Lithium-Metalloxid-Material und der Festelektrolyt ein Gewichtsverhältnis im Bereich von 1:0,4 bis 1:0,5 aufweisen.

11. Verfahren zur Herstellung eines Kathodenmaterials nach Anspruch 8, wobei jedes der mehreren Teilchen (1) eine Teilchengröße (T1) aufweist und die Überzugsschicht (20) eine Dicke (T2) aufweist, wobei die Teilchengröße (T1) und die Dicke (T2) ein Verhältnis im Bereich von 6:1 bis 40:1 aufweisen, wobei die Teilchengröße (T1) im Bereich von 5 µm bis 20 µm liegt und die Dicke (T2) im Bereich von 0,5 µm bis 3 µm liegt.

12. Verfahren zur Herstellung eines Kathodenmaterials nach Anspruch 8, wobei das erste Material Lithiumchlorid (LiCl), Lithiumfluorid (LiF) und Indiumchlorid (InCl₃) umfasst.

13. Verfahren zur Herstellung eines Kathodenmaterials nach Anspruch 8, wobei das Lösungsmittel ein flüchtiges organisches Lösungsmittel umfasst.

14. Verfahren zur Herstellung eines Kathodenmaterials nach Anspruch 8, wobei der Vorläufer in einer Vakuumumgebung oder einer inerten Atmosphäre wärmebehandelt wird, um das Kathodenmaterial zu bilden, wobei der Vorläufer bei einer Temperatur wärmebehandelt wird, um das Kathodenmaterial zu bilden, und die Temperatur im Bereich von 100 °C bis 250 °C liegt.

## Revendications

1. Un matériau de cathode comprenant une pluralité de particules (1), chacune de la pluralité de particules (1) étant **caractérisée en ce qu'**elle comprend
une couche de coeur (10) comprenant un matériau d'oxyde métallique de lithium, le matériau d'oxyde métallique de lithium ayant une composition de Li[NiₐCo_{d}Mn_{c}Al_{d}]O₂, où a+b+c+d=1, 0,8<a<1, 0<b<1, 0≤c<1 et 0≤d<1 ; et
une couche de revêtement (20) appliquée sur la couche centrale (10) et comprenant un électrolyte solide, l'électrolyte solide étant formé par une réaction d'un premier matériau sur la couche centrale (10) et ayant une composition de Li₃InClₓF_{y}, x+y=6, 4≤x≤5,5 et 0.5≤y≤2, dans lequel le matériau d'oxyde métallique de lithium, le premier matériau et un solvant sont mélangés pour former un précurseur, et le précurseur est traité thermiquement pour former le matériau de cathode, dans lequel le premier matériau comprend du lithium, de l'indium, du chlore et du fluor, et le matériau d'oxyde métallique de lithium et l'électrolyte solide ont un rapport en poids dans la plage de 1:0,3 à 1:0,6.

2. Le matériau de cathode selon la revendication 1, où 0,9<a<1.

3. Le matériau de cathode selon la revendication 1, dans lequel le matériau d'oxyde métallique de lithium et l'électrolyte solide ont un rapport pondéral dans la plage de 1:0,4 à 1:0,5.

4. Le matériau de cathode selon la revendication 1, dans lequel chacune de la pluralité de particules (1) a une taille de particule (T1) et la couche de revêtement (20) a une épaisseur (T2), dans lequel la taille de particule (T1) et l'épaisseur (T2) ont un rapport dans la plage de 6:1 à 40:1, dans lequel la taille de particule (T1) est dans la plage de 5 µm à 20 µm et l'épaisseur (T2) est dans la plage de 0,5 µm à 3 µm.

5. Le matériau de cathode selon la revendication 1, dans lequel le premier matériau comprend du chlorure de lithium (LiCl), du fluorure de lithium (LiF) et du chlorure d'indium (InCl₃).

6. Le matériau de cathode selon la revendication 1, dans lequel le solvant comprend un solvant organique volatil.

7. Le matériau de cathode selon la revendication 1, dans lequel le précurseur est traité thermiquement dans un environnement sous vide ou une atmosphère inerte pour former le matériau cathodique, dans lequel le précurseur est traité thermiquement à une température pour former le matériau cathodique, et la température est dans la plage de 100 °C à 250 °C.

8. Un procédé de préparation d'un matériau de cathode, **caractérisé en ce qu'**il comprend les étapes suivantes :
(a) fournir un matériau d'oxyde métallique de lithium ayant une composition de Li[NiₐCo_{b}Mn_{c}Al_{d}]O₂, où a+b+c+d=1, 0,8<a<1, 0<b<1, 0≤c<1 et 0≤d<1 ;
(b) mélanger le matériau d'oxyde métallique de lithium avec un premier matériau et un solvant pour former un précurseur, dans lequel le premier matériau comprend du lithium, de l'indium, du chlore et du fluor ; et
(c) le traitement thermique du précurseur pour former le matériau cathodique comprenant une pluralité de particules (1), chacune de la pluralité de particules (1) comprenant une couche centrale (10) et une couche de revêtement (20) appliquée sur la couche centrale (10), la couche centrale (10) comprenant le matériau d'oxyde métallique de lithium et la couche de revêtement (20) comprenant un électrolyte solide ayant une composition de Li₃InClₓF_{y}, où x+y=6, 4≤x≤5.5 et 0,5≤y≤2, et le premier matériau réagit sur la couche centrale (10) pour former l'électrolyte solide, dans lequel le matériau d'oxyde métallique de lithium et l'électrolyte solide ont un rapport en poids dans la plage de 1:0,3 à 1:0,6.

9. Le procédé de préparation d'un matériau de cathode selon la revendication 8, dans lequel 0,9<a<1.

10. Le procédé de préparation d'un matériau de cathode selon la revendication 8, dans lequel le matériau d'oxyde métallique de lithium et l'électrolyte solide ont un rapport pondéral dans la plage de 1:0,4 à 1:0,5.

11. Le procédé de préparation d'un matériau de cathode selon la revendication 8, dans lequel chacune de la pluralité de particules (1) a une taille de particule (T1) et la couche de revêtement (20) a une épaisseur (T2), dans lequel la taille de particule (T1) et l'épaisseur (T2) ont un rapport dans la plage de 6:1 à 40:1, la taille de particule (T1) étant dans la plage de 5 µm à 20 µm et l'épaisseur (T2) étant dans la plage de 0,5 µm à 3 µm.

12. Le procédé de préparation d'un matériau de cathode selon la revendication 8, dans lequel le premier matériau comprend du chlorure de lithium (LiCl), du fluorure de lithium (LiF) et du chlorure d'indium (InCl₃).

13. Le procédé de préparation d'un matériau de cathode selon la revendication 8, dans lequel le solvant comprend un solvant organique volatil.

14. Le procédé de préparation d'un matériau de cathode selon la revendication 8, dans lequel le précurseur est traité thermiquement dans un environnement sous vide ou une atmosphère inerte pour former le matériau cathodique, dans lequel le précurseur est traité thermiquement à une température pour former le matériau cathodique, et la température est dans la plage de 100 °C à 250 °C.
